# EUROPÄISCHE PATENTANMELDUNG

(11) **EP 0 754 930 A2**
(43) Veröffentlichungstag der Anmeldung: **22.01.1997**
(21) Anmeldenummer: 96108401.9
(22) Anmeldetag: 28.05.1996
(51) Int. Cl.: G01B 11/00

(54) **Vorrichtung zum optischen Abtasten von Messflächen**

(30) Priorität: 20.07.1995 DE 19526526
(71) Anmelder: Bayerische Motoren Werke Aktiengesellschaft, 80788 München (DE)
(72) Erfinder: Gieseler, Otto, 85716 Unterschleissheim (DE); Lindner, Walter, 82140 Olching (DE)

(57) **Zusammenfassung**

Bei einer Vorrichtung zum optischen Abtasten von Meßflächen, mit einer Strahlquelle für einen Punktlichtstrahl, einem Detektor zum Erfassen des von einem in der Meßfläche gelegenen Meßpunkt reflektierten Lichtsignals und mit einer Auswerteeinrichtung zur Lagebestimmung des Meßpunktes aus dem reflektierten Lichtsignal, sind Sender und Detektor in einem Gehäuse enthalten und das Gehäuse enthält ferner einen Reflektor und/oder Empfänger einer optischen 3D-Objektverfolgungseinrichtung und die mittels dieser Einrichtung gewonnenen Informationen sind über die räumliche Lage des Gehäuses ebenfalls der Auswerteeinrichtung zugeführt.

## Beschreibung

Die Erfindung bezieht sich auf eine Vorrichtung mit den Merkmalen des Oberbegriffs von Patentanspruch 1.

Eine derartige Vorrichtung ist beispielsweise aus der DE 40 29 339 A bekannt. Eine Meßfläche wird in der Weise abgetastet, daß der Punktlichtstrahl in definierter Weise über die Oberfläche bewegt wird und aus der Kenntnis der bekannten Steuerung des Punktlichtstrahls und des jeweils reflektierten Lichtsignals die Information über die Gestalt und ggf. Struktur der Meßfläche gewonnen wird. Die Vorrichtung sitzt ihrerseits in einem Träger, der in definierter Weise bewegbar ist und der sich seinerseits auf einem festen Fundament abstützt.

Die Handhabbarkeit und Einsatzmöglichkeit der bekannten Vorrichtung ist an die Bewegungsmöglichkeiten und Reichweite des Trägers gebunden. Die Vorrichtung ist daher nur für stationäre Anwendungen geeignet.

Der Erfindung liegt die Aufgabe zugrunde, eine Vorrichtung der eingangs genannten Art zu schaffen, die sich durch eine deutliche verbesserte Einsatzmöglichkeit und Handhabbarkeit auszeichnet.

Die Erfindung löst diese Aufgabe durch die kennzeichnenden Merkmale des Patentanspruchs 1.

Durch die Hinzunahme einer Objektverfolgungseinrichtung wird es möglich, die räumliche Lage des Gehäuses als Träger der Vorrichtung zu bestimmen und die Vorrichtung an beliebiger Stelle einzusetzen. Ein geeignetes optisches 3D-Objektverfolgungssystem ist beispielsweise aus der US 4 714 339 bekannt. In dieser Druckschrift sind verschiedene Ausführungsformen einer Objektverfolgungseinrichtung beschrieben, die alle auf einem stationären Sender für einen Laser-"Such"-Strahl beruhen, dessen Strahlrichtung und Strahlwinkel in beliebiger Weise verändert werden kann und der in Verbindung mit einem am zu detektierenden Zielpunkt angeordneten Reflektor bzw. Empfänger sowohl die relative Lageänderung des Zielpunkts als auch dessen Elevation und Drehlage bestimmen kann. Bei der Erfindung wird der Zielpunkt in das Gehäuse gelegt. Damit ist aus der Information über die Lage des Zielpunkts, d.h. des Gehäuses und der mit Hilfe der Abtastvorrichtung gewonnenen Information eine flexible und variable Einsatzmöglichkeit der Vorrichtung gegeben. Die Information über die Beschaffenheit der Meßfläche ergibt sich durch geometrische Superposition der Informationen aus Abtastvorrichtung und Objektverfolgungseinrichtung.

Die Objektverfolgungseinrichtung arbeitet bevorzugt optisch. Sie kann aber auch auf einer anderen Basis wie Radar oder Ultraschall beruhen.

Die Einsatzmöglichkeit der erfindungsgemäßen Vorrichtung läßt sich weiter steigen, wenn das Gehäuse von Hand beweglich ist. Im Gegensatz zu einem bodengestützten Gehäuse wird dann eine weitgehende Freiheit in der Handhabung der Vorrichtung erreicht und es lassen sich auch schwer zugängliche Meßflächen untersuchen.

Die räumliche Zuordnung zwischen dem Gehäuse und der Objektverfolgungseinrichtung kann hinsichtlich der Neigung und/oder Drehung des Gehäuses vorgegeben sein. Demgegenüber ergibt sich eine weitere Verbesserung in der Handhabbarkeit, wenn die Neigung und/oder Drehung des Gehäuses frei wählbar ist und mittels einer geeigneten Einrichtung bestimmt und der Auswerteeinrichtung zugeführt werden kann. Diese Bestimmung kann auf unterschiedliche Weise erfolgen. So ist es möglich, hierfür zusätzlich die Objektverfolgungseinrichtung einzusetzen. Maßnahmen hierfür ergeben sich auf der bereits genannten US 4 714 339 A. Alternativ dazu kann die Neigung und/oder Drehung des Gehäuses auch mit Hilfe eines innerhalb des Gehäuses angeordneten Gebers bestimmt und der Auswerteeinrichtung zugeführt werden.

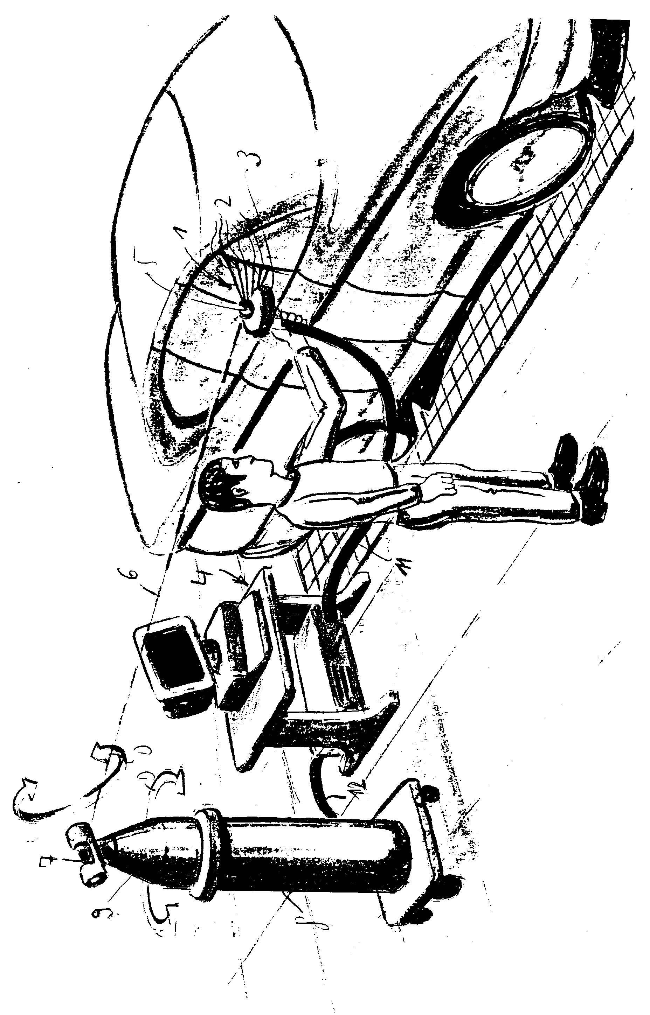

Anhand der Zeichnung ist die Erfindung weiter erläutert.

In der einzigen Figur ist schematisch der Einsatz der erfindungsgemäßen Vorrichtung zum Abtasten einer Meßfläche gezeigt. Bei der Meßfläche handelt es sich um ein Fahrzeugmodell, das beispielsweise im Zuge der Modellentwicklung eingesetzt wird und dessen Oberflächenkoordinaten dazu dienen, Fertigungswerkzeuge und dgl. in Auftrag zu geben.

Die Oberflächenkoordinaten werden mit Hilfe einer Laser-Abtasteinrichtung 1 bestimmt, bei der ein Laserstrahl 2 in definierter Weise über die Meßfläche bewegt wird und bei dem aus der Information über die reflektierten Lichtsignale die räumlichen Koordinaten des jeweiligen Meßpunkts bestimmt werden. Sender und Empfänger des Laserstrahls sitzen in einem Gehäuse 3. Sie sind nicht im einzelnen dargestellt. Zur besseren Veranschaulichung sind mehrere Laserstrahlen 2 als fächerförmig aufgeweitetes Laserstrahlbündel gezeigt. Die ausgesandten und reflektierten Lichtstrahlen sind als ein Strahl dargestellt. Der Verlauf der Laserstrahlen kann auch derart sein, daß ein und derselbe Strahl durch gezielte Parallelverschiebung einen Bereich der Meßfläche abtastet (scant). Ein Beispiel für eine derartige Strahlauslenkung ist in der DE 40 29 339 A1 dargestellt.

Das Gehäuse 3 ist frei von Hand beweglich. Es ist mit einer Auswerteeinrichtung 4 verbunden, in der die Informationen über die reflektierten Lichtsignale zusammen mit den Bewegungsinformationen des Senders für den Lichtstrahl 2 ausgewertet werden.

Das Gehäuse 3 ist ferner mit einem Reflektor 5 für einen punktförmigen Laserstrahl 6 versehen, der von einer Quelle 7 ausgeht. Reflektor 5, Laserstrahl 6 und Quelle 7 sind Bestandteil einer 3D-Objektverfolgungseinrichtung 8, die wie im einzelnen beispielsweise in der US 4 714 339 A gezeigt, stationär angeordnet ist und bei der die Ausrichtung des Lasers 7 durch Rotation eines Oberteils 9 bzw. eines Kopfes 10 der Änderung der räumlichen Lage des Empfängers 5 nachfolgen kann. Zur Veranschaulichung der Rotationsbewegungen des Oberteils 9 bzw. des Kopfes 10 der Einrichtung 8 sind Drehsymbole D eingezeichnet.

Die Information über die Ausrichtung des Oberteils 9 und des Kopfes 10 der Objektverfolgungseinrichtung 8 ist ebenfalls der Auswerteeinrichtung 4 zugeführt. Durch eine entsprechende Steuerung des Empfängers 5 innerhalb des Gehäuses 3 wird es zudem möglich, die Drehlage und die Neigung des Gehäuses 3 im Bezug auf die Richtung des Laserstrahls 6 zu bestimmen. Dadurch wird es möglich, die Koordinaten der Meßfläche in Bezug auf den Ort der Laserquelle 7 als Nullpunkt zu berechnen und damit die Kontur und Struktur der Meßfläche zu bestimmen.

Aus der Darstellung ergibt sich, daß das Gehäuse 3 frei handhabbar ist. Die zur Verdeutlichung überdimensional dargestellten elektrischen Verbindungen 11 und 12 des Gehäuse 3 bzw. der Objektverfolgungseinrichtung 8 zur Auswerteeinrichtung 4 sind in Wirklichkeit dünne Leitungen, die die Handhabbarkeit in keiner Weise einschränken. Das Gehäuse 3 ist in beliebiger Weise drehbar, kippbar und in seiner Höhenlage veränderlich. Voraussetzung für die ordnungsgemäße Funktion der gesamten Vorrichtung und damit der Möglichkeit, die Koordinaten der Meßpunkte der Meßfläche exakt zu bestimmen, ist lediglich eine stets bestehende 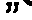 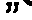 Sichtverbindung" zwischen der Laserquelle 7 und dem Gehäuse 3. Mit Hilfe von Bedienelementen (z.B. Schaltern, nicht dargestellt) am und in der Nähe des Gehäuses 3 ist es möglich, den Ablauf des Abtastvorgangs zu steuern und zusätzliche Informationen beispielsweise über die Art, das Aussehen usw. der Meßfläche in die Auswerteeinrichtung 4 einzugeben. Damit ist es möglich, die Abtastung und die Auswertung objektorientiert zu steuern.

## Patentansprüche

1. Vorrichtung zum optischen Abtasten von Meßflächen, mit einer Strahlquelle für einen Punktlichtstrahl, einem Detektor zum Erfassen des von einem in der Meßfläche gelegenen Meßpunkt reflektierten Lichtsignals und mit einer Auswerteeinrichtung zur Lagebestimmung des Meßpunktes aus dem reflektierten Lichtsignal, dadurch gekennzeichnet, daß Sender und Detektor in einem Gehäuse (3) enthalten sind und daß das Gehäuse ferner einen Reflektor und/oder Empfänger einer 3D-Objektverfolgungseinrichtung (8) enthält und daß die mittels dieser Einrichtung gewonnenen Informationen über die räumliche Lage des Gehäuses ebenfalls der Auswerteeinrichtung (4) zugeführt sind.

2. Vorrichtung nach Anspruch 1, dadurch gekennzeichnet, daß es sich um eine optische 3D-Objektverfolgungseinrichtung (8) handelt, daß das Gehäuse (3) frei von Hand beweglich ist.

3. Vorrichtung nach Anspruch 1 oder 2, dadurch gekennzeichnet, daß die Information über die Neigung und/oder Drehung des Gehäuses (3) mittels der Objektverfolgungseinrichtung (8) gewonnen und ebenfalls der Auswerteeinrichtung zugeführt ist.

4. Vorrichtung nach Anspruch 1 oder 2, dadurch gekennzeichnet, daß die Information über die Neigung und/oder Drehung des Gehäuses mittels eines im Gehäuse angeordneten Neigungs- bzw. Drehgebers gewonnen ist.

5. Vorrichtung nach einem der Ansprüche 1 bis 4, dadurch gekennzeichnet, daß der Abtast- und oder Auswertevorgang durch Bedienelemente steuerbar ist, die am Gehäuse (3) angeordnet sind.
